Europäisches Patentamt

**European Patent Office**

Office européen des brevets

(11) Publication number: **0 100 229**
A1

(12) # EUROPEAN PATENT APPLICATION

(21) Application number: **83304296.3**

(22) Date of filing: **25.07.83**

(51) Int. Cl.³: **B 23 K 3/00**, B 08 B 15/04

(30) Priority: **26.07.82 GB 8221512**

(71) Applicant: **ADCOLA PRODUCTS LIMITED, Adcola House Gauden Road, London SW4 6LH (GB)**

(43) Date of publication of application: **08.02.84**
**Bulletin 84/6**

(72) Inventor: **Lamb, Richard Terry, 8 Woodland Way, Purley Surrey (GB)**

(74) Representative: **Jennings, Guy Kenneth et al, GILL JENNINGS & EVERY 53-64 Chancery Lane, London WC2A 1HN (GB)**

(84) Designated Contracting States: **CH DE FR GB LI**

(54) **Soldering tool.**

(57) A suction tube for the removal of soldering fumes extends along the length of an electrical soldering tool with an inlet 16 situated immediately adjacent the bit 5 and comprises two lengths 10, 15, the first of which extends along and is fixed to the handle 3 and the other of which extends from the region of the handle 3 to the bit 5. The length 15 is detachable from the length 10 for cleaning purposes, the connection being made by a spring collet 12.

EP 0 100 229 A1

GJE/10/2004/02

Adcola Products Limited

- 1 -

## Soldering tool

Respiratory troubles brought about by the inhalation of fumes from soldering flux have been identified as occupational asthma and have been found to be caused mainly by fumes containing colophony or pine resin which is a main constituent of most soldering fluxes. Although it may take several years before a worker becomes sensitised by these fumes, once sensitised, he is liable to react after very short periods of exposure. It is therefore important to avoid the risk of inhalation of fumes as far as reasonably possible and basic precautionary measures are already being taken in factories.

These measures fall into two general categories. Either large volumes of air are removed by a fan-operated system which is sufficient to create a draught around the operator and thus to carry the fumes with it. It is uncomfortable for the operator to work in a permanent draught and the system is expensive in requiring large-sized trunking and powerful fans. Moreover, since heated air is being exhausted outside the building, heating costs are increased. In the alternative system, therefore, much smaller quantities of air are removed, but this requires the suction inlet

0100229

- 2 -

to be situated in the immediate vicinity of the soldering operation and to be held in position by some form of bracket or other support. As a result, this inevitably impedes the operator who may decide to dispense with the suction device and run the risk of inhaling the fumes.

According to the present invention, a suction tube extends along the length of a soldering tool and has an inlet situated immediately-adjacent the bit of the tool and an outlet for connection to a source of suction and comprising two lengths, the first of which extends along and is fixed to the handle and the other of which extends from the region of the handle to the bit of the tool and is detachable from the first for cleaning purposes. Since the inlet is very much closer to the source of fumes than any separately supported device could be, a much smaller quantity of air needs to be removed and since the inlet automatically moves with the tool itself, it does not impede the operator in any way and there is no incentive for the operator to switch off the suction. Perfectly adequate removal of fumes can be achieved with a diameter of suction tube as small as three millimetres, the actual volume of air removed being, for example, 20 to 30 litres per minute. This requires very much smaller suction arrangements than with either of the two previous systems and quite small diameter tubing as compared with the trunking required previously.

- 3 -

Since a high concentration of fumes is drawn away along a relatively small diameter tube, there is a high rate of deposit of solid material from the fumes and the relatively frequent cleaning which is required is made very simple by the detachability of the second part of the tube.

Preferably the first length of the suction tube extends through the interior of the handle, but it is also possible for it to be fixed externally, e.g. by means of a supporting bracket fixed alongside the normal mounting flange for the heating element or by means of a specially designed mounting flange. If the first length of the suction tube extends internally, it is preferably displaced from the axis of the handle, and a tube enclosing the heating element is located on the opposite side of the axis from the suction tube. This enables the electrical conductors passing along the handle to be located off-axis, thus allowing sufficient space for an adequate size of suction tube without the need for enlarging the cross section of the handle beyond the normal size.

The detachable length of suction tubing is preferably made of stainless steel so as to facilitate cleaning, which can be carried out, for example, by a normal pipe cleaner. If it is important to avoid stopping operation for the cleaning of the tubing, one or more spare lengths of tubing may be kept available so that when one length requires cleaning, it can easily be removed and replaced by a clean length.  The length of tube extending along the handle is preferably also of stainless steel and is preferably straight in order to facilitate cleaning.  Most of the deposit occurs in the detachable length of tube and the length attached to the handle requires cleaning relatively. . infrequently.

A construction of soldering tool in accordance with the invention will now be described by way of example, with reference to the accompanying drawings, in which:-

Figure 1 is an elevation;  and

Figure 2 is a detailed view to an enlarged scale of part of the tool shown in Figure 1.

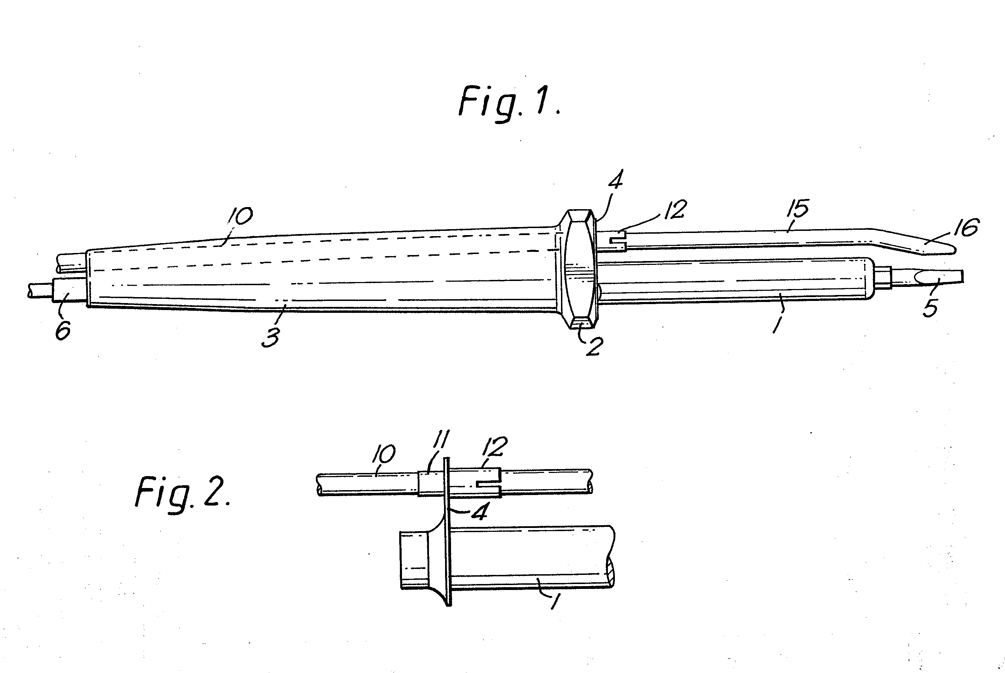

The main components of the tool shown in Figure 1 are of standard design and are therefore shown only in outline.  The tool includes an electric heating element enclosed within a protective tube 1 and secured to an enlarged end 2 of a handle 3 by means of a mounting flange 4. In contrast to the normal arrangement, the tube 1 and a bit 5 at its forward end are slightly displaced from the axis of the handle.  This enables the supply to the heating element by way of a flexible cable 6  also to be displaced from the axis of the cable as indicated in dotted line.

0100229

- 5 -

In addition to the conventional components just described, the tool includes a suction tube or pipe which is in two lengths. The first is a length of stainless steel tubing 10 which extends along the length of the handle 3 and for which there is ample space owing to the eccentric mounting of the heating element and the cable 6. The length of tube 10 is connected at its left hand end to a source of suction by means of a connector (not shown).

As best seen in Figure 2, the right hand end of the length of tube 10 is permanently connected, e.g. by brazing, at 11 to the rear of a spring collet 12 which extends through the mounting plate 4. A second length of stainless steel tube 15 is detachably fitted into the spring collet 12 and is straight along the majority of its length and parallel with the tube 1. In the region of the bit 5, the tube 15 curves inwardly at 16 to form an inlet or opening immediately adjacent the bit 5, that is to say in the region of fume generation when a soldering operation is taking place.

As the fumes from the soldering operation cool, there is a rapid deposit of solid material, most of which occurs within the length 15 of the stainless steel tubing. Owing to its easy removability, this can be cleaned without difficulty as frequently as required or, as previously described, can be replaced by a clean length of tube. When the length 15 has been removed, the length 10 of tube is also accessible for cleaning purposes and the fact that this length is quite straight facilitates cleaning.

C L A I M S

1.      An electrical soldering tool including a suction tube extending along the length of the tool,  the tube having an inlet situated immediately adjacent the bit of the tool and an outlet for connection to a source of suction and comprising two lengths, the first of which extends along and is fixed to the handle and the other of which extends from the region of the handle to the bit of the tool and is detachable from the first for cleaning purposes.

2.      A soldering tool according to claim 1 in which the first length of suction tube extends through the interior of the handle.

3.      A soldering tool according to claim 2 in which the suction tube and a tube enclosing the heating element are located on opposite sides of the axis of the handle.

4.      A soldering tool according to any one of the preceding claims in which the second length of the tube is made of stainless steel.

5.      A soldering tool according to any one of the preceding claims in which the two lengths of tube are connected together by a spring collet.

1/1

Fig. 1.

Fig. 2.

0100229

European Patent
Office '

**EUROPEAN SEARCH REPORT**

Application number

EP 83 30 4296

## DOCUMENTS CONSIDERED TO BE RELEVANT

| Category | Citation of document with indication, where appropriate, of relevant passages | Relevant to claim | CLASSIFICATION OF THE APPLICATION (Int. Cl. $^3$) |
|---|---|---|---|
| Y | GB-A-2 053 761 (BNF METALS TECHNOLOGY CENTRE) * Figure 2; lines 82-100 * | 1,2 | B 23 K 3/00 B 08 B 15/04 |
| A | | 4 | |
| Y | GB-A-2 035 173 (J.M. JENSEN) * Figure 1 * | 1 | |
| Y | US-A-4 057 705 (H.D. COCKRUM et al.) * Figure 1; claim 1 * | 1,2 | |
| A | DE-U-1 848 052 (SIEMENS-ELECTROGERÄTE AG) * Claim 1 * | 5 | |

|  | TECHNICAL FIELDS SEARCHED (Int. Cl. $^3$) |
|---|---|
|  | A 47 L 9/00 B 08 B 15/00 B 23 K 1/00 B 23 K 3/00 |

The present search report has been drawn up for all claims

| Place of search BERLIN | Date of completion of the search 12-10-1983 | Examiner WUNDERLICH J E |
|---|---|---|

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO Form 1503. 03.82